# EUROPEAN PATENT SPECIFICATION

(11) **EP 3 069 317 B1**
(45) Date of publication and mention of the grant of the patent: **04.07.2018**
(21) Application number: 14795621.3
(22) Date of filing: 06.11.2014
(51) Int. Cl.: G06T 7/00, G06K 9/00

(54) **METHOD FOR RECOGNIZING A COVERED STATE OF A CAMERA, CAMERA SYSTEM AND MOTOR VEHICLE**
VERFAHREN ZUR ERKENNUNG EINES BEDECKTEN ZUSTANDS EINER KAMERA, KAMERASYSTEM UND KRAFTFAHRZEUG
PROCÉDÉ PERMETTANT DE SAVOIR QU'UNE CAMÉRA EST COUVERTE, SYSTÈME À CAMÉRA ET VÉHICULE À MOTEUR

(30) Priority: 12.11.2013 DE 102013019138
(43) Date of publication of application: 21.09.2016
(73) Proprietor: Application Solutions (Electronics and Vision) Limited, Lewes, East Sussex BN7 2 AQ (GB); Connaught Electronics Ltd., Tuam, County Galway (IE)
(72) Inventor: VOROS, Robert, Tuam County Galway (IE); HUGHES, Ciaran, Kinvara County Galway (IE); YADAV, Dev, Lewes East Sussex BN7 2TF (GB)
(74) Representative: Hofstetter, Schurack & Partner
(86) International application number: PCT/EP2014/073898
(87) International publication number: WO 2015/071162

(56) References cited:
- EP-A1- 1 498 721
- WO-A1-2010/038223
- US-A1- 2009 278 950
- US-B1- 7 535 501
- TOKIHIRO FUKATSU ET AL: "A web-based sensor network system with distributed data processing approach via web application", COMPUTER STANDARDS AND INTERFACES, ELSEVIER SEQUOIA. LAUSANNE, CH, vol. 33, no. 6, 16 March 2011 (2011-03-16) , pages 565-573, XP028386004, ISSN: 0920-5489, DOI: 10.1016/J.CSI.2011.03.002 [retrieved on 2011-03-30]

## Description

The invention relates to a method for recognizing a covered or masked state of a camera of a motor vehicle. In addition, the invention relates to a camera system for performing such a method as well as to a motor vehicle with such a camera system.

Camera systems for motor vehicles are already prior art. Usually, they include at least one camera attached to the motor vehicle and capturing an environmental region of the motor vehicle. Such a camera then provides images of the environmental region, wherein the images can be processed by means of an electronic computing device. Based on the images, the computing device can then provide very different functionalities in the motor vehicle and thus support the driver in driving the motor vehicle. A known functionality is in displaying the captured images on a display in the interior of the motor vehicle. According to a further functionality, for example, obstacles can also be detected, which are located in the environment of the motor vehicle, and the driver can correspondingly be warned.

It can occur that the lens of the camera is blocked or masked by a contamination (dirt, water drop or the like) such that the captured images do no longer present the environmental region of the motor vehicle, but for instance a dark spot or the like. Therein, the lens can be masked by water drops or the masked state of the camera can also arise due to a contamination. Generally, a state is understood by the blocked state of the camera, in which the lens of the camera is blocked by a contamination.

From the prior art, methods are already known, which serve for detecting such a blocked state of the camera. Thus, for example the document EP 1 826 648 A2 describes a method allowing the recognition of water drops on the lens of a camera. On the other hand, here, it is also provided that atmospheric components can be detected by means of an image processing device, such as for example fog or rain. This is detected based on a distortion as well as based on a focus error of images.

Further, US 2009/278950 A1 discloses a method for recognizing lens flare in images taken with a camera. Further, US 7 535 501 B1 discloses a method for recognizing dust on the image sensor of a camera.

The invention starts from a method, in which the masked state is detected based on an image, which is filtered by means of a high-pass filter. Such a method is for example known from the document WO 2010/038223 A1 and serves for detecting a contaminated state of the lens of a camera. The captured sequence of images is subjected to high-pass filtering, wherein predetermined image regions can be detected in the images with the high-pass filter. An image region with a relative low spatial frequency (having no or only few edges or corners) is interpreted as possible contamination of the lens.

In the detection of the covered state of a camera by high-pass filtering of the images, two problems have arisen in the prior art:
The first problem occurs if the camera - namely the lens - is covered by an opaque object, through which no light at all or only very low light can enter the camera. With such an opaque mass located on the lens of the camera, the image sensor does not detect any light at all such that the pixels are basically black. The average of the brightness values of the pixels is therefore relatively low. In principle, such a dark image includes exclusively a noise signal in particular caused by the analog amplifier of the image sensor. The noise causes high-frequency image components, which is erroneously interpreted by the algorithm to the effect that the camera is not covered. In other words, the noise results in the fact that high-frequency components in the image can be detected, which in turn results in the assumption that the camera is not covered. Thus, the algorithm fails with an opaque object.
The second problem can occur if the lens of the camera is covered by a transparent object such as for example by water drops or the like. Basically, such transparent objects are detected by high-pass filtering of the image. However, in exceptional cases, the algorithm can fail, namely if a very bright light source is in the scene. In this exceptional case, the light enters the camera through the transparent water drops and causes a so-called saturation of individual pixels. Such a saturation implies that the brightness value of a pixel is set to a maximum possible brightness value (in the digital range), because the actual brightness of this pixel would be higher than the maximum possible value. Namely, the brightness values of the pixels are usually in a digital range of values from 0 to 255 (8 bits). However, if a pixel is detected, the brightness value of which is greater than this range of values, thus, the brightness value of this pixel is set to the maximum of 255. This pixel is then referred to as a "saturated pixel". If such saturated pixels are now detected on a covered camera, thus, the saturation of the pixels results in the fact that relatively great brightness differences occur in this image region and thus edges can be detected. Such edges present high-frequency image portions such that the recognition of the covered state of the camera will presumably fail.

Thus, a particular challenge is in finding an additional solution, how these two situations can be detected.

It is an object of the invention to provide a method improved over the prior art for recognizing a covered state of a camera of a motor vehicle, a camera system as well as a motor vehicle.

According to the invention, this object is solved by a method, by a camera system as well as by a motor vehicle having the features according to the respective claims. Advantageous implementations of the invention are the subject matter of the dependent claims. A method according to the invention serves for recognizing a covered state of a camera of a motor vehicle. An image of an environmental region of the motor vehicle is provided by means of the camera. Then, respective brightness values of pixels within at least one image region of the image are determined. Preferably, Y values in the YUV color space are determined as the brightness values. Then, the number of pixels within the at least one image region is determined, which satisfy a preset criterion with respect to the brightness values. In other words, the number of pixels is determined, the brightness values of which satisfy a preset criterion. Then, it is checked whether the camera is covered or not covered depending on this number.

Depending on the criterion, thus, different states can be detected, such as in particular a state, in which the camera is covered by an opaque object, as well as a state, in which high-frequency image portions are caused by saturated pixels. The method is used as a supplement to an algorithm, by means of which the covered state can be detected by high-pass filtering of the images. The method according to the invention now allows a statement about whether the camera is covered by an opaque object and/or saturated pixels render the detection of a covered state impossible depending on a high-pass filtered image.

In particular, the camera is an image capturing device formed for detection of light in the spectral range visible to the human. The camera can be a CCD camera or a CMOS camera. Preferably, the camera is a video camera, which can provide a plurality of images per second.

Presently, in particular, a state is understood by a covered state of the camera, in which the lens of the camera is at least partially externally covered by a mass or an object and thus blocked such that no light or only dimmed light can enter the interior of the camera through this blocked area of the lens. In particular, thus, a soiled state and/or a state covered by water and/or ice are understood by the covered state.

As already explained, a number of pixels within the at least one image region is determined, the brightness values of which satisfy a preset criterion. In an embodiment, at least two criteria can be used for the brightness values, and to each criterion, the number of pixels can be determined, the brightness values of which satisfy the respective criterion. Therein, a different cause for the covered state may be associated with each criterion. By providing several criteria, thus, very different situations can be detected, such as in particular a first situation, in which the lens of the camera is covered by an opaque object, as well as a situation, in which high-frequency portions in the image are caused by saturated pixels.

Thus, a first state can be associated with a first criterion, in which the camera is at least partially covered by an opaque and thus light-tight object. Additionally or alternatively, a second criterion can also be defined, which is associated with a second state, in which it is assumed that the camera is at least partially covered by a transparent object. In this second state, preferably, saturated pixels are detected, which render detection of the covered state of the camera by means of the high-pass filter impossible such that it can be preventively assumed that the camera is covered. These two states present a reliable supplement to an algorithm, by means of which the covered state of the camera can be detected by high-pass filtering of the images.

Below, the two criteria are explained in more detail:
In an embodiment, it is provided that a brightness average value within the image region is determined from the brightness values of the pixels. According to a first criterion, a first number of pixels within the image region can be determined, the brightness value of which is greater than the brightness average value at least by a predetermined limit value. Depending on this first number, it can then be checked whether the camera is covered or not covered. In other words, the number of pixels is determined, the brightness values of which are considerably greater than the brightness average value within the image region. Thus, the number of brightness peaks within the image region is determined, and depending on this number, it is determined whether the camera is covered or not covered. This embodiment exploits the fact that with a camera covered by an opaque object, if the image is substantially composed exclusively of noise, the number of brightness peaks or the number of pixels with a great brightness value overall should be relatively low. If this is detected, thus, it can be assumed that the image is only a noise signal and the camera thus is covered by an opaque object.

The covered state of the camera - in particular a state covered by an opaque object - can therefore be assumed if the first number of pixels (number of brightness peaks) is smaller than a present threshold value. Thus, the covered state of the camera can be detected without much effort, namely even if the detection by means of the high-pass filter should fail due to the noise.

For the assumption of the covered state of the camera by an opaque object, an additional condition can also be defined that the brightness average value within the at least one image region is smaller than a preset threshold value. Namely, if the brightness average value is low, thus, it can be assumed that the image is only noise and the camera thus is covered by an opaque object.

An additional condition can be configured as follows: the image can be divided in a plurality of image regions, and the first number of pixels, i.e. the number of pixels, the brightness value of which is greater than the brightness average value at least by a predetermined limit value within the respective image region, can each be determined to each image region. Those image regions, in which the first number is smaller than the preset threshold value, can then be combined to an overall region. The covered state of the camera is preferably only assumed if the overall region - and in particular an uninterrupted and thus unitary overall region - is greater than a preset threshold. This embodiment is based on the assumption that an opaque object usually covers a major area of the lens. Thus, the plausibility of the method can be improved.

According to a second criterion, a second number of pixels within the image region can be determined, the brightness value of which corresponds to a maximum possible brightness value due to saturation. Depending on this number of saturated pixels, it can then be checked whether the camera is covered or not covered. By the evaluation of the number of saturated pixels, high-frequency image portions can be detected, which can be present in the image even in a covered state of the camera. Namely, a situation can be detected, in which the camera is covered by a transparent object (for instance water drops) and a bright light source is in the environment of the motor vehicle, such as for example a headlight of an oncoming vehicle or else a street lamp, which illuminates the camera also through the transparent object and results in saturation of several pixels. This situation can be detected and an assumption can optionally be made that the actual detection of the covered state of the camera by means of a high-pass filter is not possible due to the saturated pixels. As a precaution, here, it can be assumed that the camera is covered.

In particular, the covered state of the camera can be assumed if the second number - thus the number of saturated pixels within the image region - is greater than a preset threshold value. Namely, it can then be assumed that the image has high-frequency portions, which render the detection of a covered state of the camera impossible.

If the covered state is detected because the number of saturated pixels is greater than the threshold value, thus, the camera can only be again classified as non-covered if the number of saturated pixels within the image region of the respective image remains smaller than the threshold value over a predetermined sequence of images. Especially then, it can be assumed with high probability that the detection of the covered state of the camera by means of the high-pass filter is again possible.

Generally, thus, a number of pixels is determined, the brightness values of which satisfy a predetermined criterion. If the covered state is not detected based on this number of pixels, the image can be filtered by means of a high-pass filter, and based on the filtered image, it can be checked whether the camera is covered or not covered. The method according to the invention can thus be combined with an algorithm, by means of which the covered state of the camera can be detected based on a high-pass filtered image. Thus, the covered state of the camera can be detected in all possible situations.

With respect to the evaluation of the high-pass filtered image, it has proven advantageous if the following method is performed:
The image can be filtered by means of a high-pass filter such that a filtered image is provided. In the filtered image, a scan window is defined. For a plurality of different positions of the scan window in the filtered image, a pixel with a value maximum within the scan window can then respectively be detected. The covered state can then be recognized depending on the maximum values of the filtered image.

Accordingly, it is proposed to subject the high-pass filtered image to further filtering, namely a maximum filter, in which local maximum values (in particular maximum brightness values) of the pixels of the image are located with the aid of a scan window. In other words, the high-pass filtered image is "scanned" with the aid of the scan window, and a pixel with the maximum value is searched for in each position of the scan window. In particular, the method has the advantage that the recognition of the masked state can be effected in very robust manner because the variations in the position of high-frequency image portions in the image do not affect the recognition of the masked state. For example, the maximum values can be compared to a limit value, and depending on a result of this comparison, it can be determined whether or not the lens of the camera is masked by a contamination. Thus, road regions can be differentiated from an actual contamination of the lens of the camera.

The "scanning" of the image by means of the scan window is for example effected such that the position of the scan window in the filtered image is stepwise altered starting from a start position (for example from a corner of the image), namely up to a final position (for example of the opposing corner). This scanning can be effected either column by column or row by row. Therein, the pixel with a maximum value, in particular the maximum brightness value, is respectively detected for each position of the scan window. The step size in the alteration of the position of the scan window can for example be in a range of values from 1 pixel to 10 pixels.

Preferably, the scanning is effected by means of the scan window such that respective overlap areas arise between the adjacent positions of the scan window. If the pixels with the maximum value is detected in a first position of the scan window, thus, it can be examined in a second, adjacent position of the scan window whether or not the pixel with the maximum value from the first position of the scan window is within the overlap area. If this pixel is within the overlap area, in the second position of the scan window, exclusively pixels of the current scan window located outside of the overlap area can be examined to the effect whether or not the values thereof are greater than the maximum value from the first position of the scan window. Such an approach considerably reduces the computing time because it is not always required to compare all of the pixels of the scan window to each other, but exclusively the pixels located outside of the overlap area. Thus, the position of the pixel with the maximum value can be stored for each position of the scan window such that in the next position of the scan window, it can be examined whether or not the pixel with the maximum value from the previous position of the scan window is within the overlap area.

The above described filtering of the image with the maximum filter represents a spatial filtering of the individual image. A temporal component can also be added to this:

For detecting the masked state of the camera, a temporal sequence of high-pass filtered images of the camera can be used. For each image of this sequence, the pixel with the maximum value can respectively be detected for the mentioned plurality of positions of the scan window such that a temporal succession of maximum values is respectively provided for the plurality of positions of the scan window. Then, the masked state of the camera can be detected depending on the temporal successions. If the maximum values are evaluated over the time, thus, a particularly robust detection of the blocked state of the camera is allowed without this detection being affected by errors due to a temporal variation of the position of high-frequency image portions.

The mentioned sequence of high-pass filtered images is preferably formed by a subset of an overall sequence of images, which is provided by the camera. This subset can be selected such that a time interval between respective points of time of capture of two immediately consecutive images of the used sequence and/or a distance of the motor vehicle traveled between these points of time satisfy a predetermined criterion. Thus, two images can be prevented from being processed, which substantially show the same scene or the same environment. Therefore, it is managed to prevent erroneous decisions in the detection of the masked state on the one hand and also to reduce the computational effort to a minimum on the other hand.

Therein, it proves advantageous if the above mentioned criterion implies that the time interval between the points of time is greater than a preset value or is in a preset range of values. This means that two images of the overall sequence can be used for recognizing the masked state, which have been captured in a preset time interval to each other. This time interval can for example be in a range of values from 0.5 seconds to 2 seconds. This range of values represents a good tradeoff between the accuracy of the recognition of the masked state on the one hand as well as the velocity of the recognition.

Additionally or alternatively, the above mentioned criterion can also imply that the distance of the motor vehicle traveled between the first and the second point of time is greater than a preset value, for example greater than 10 m, in particular is in a range of values from 10 m to 20 m, and preferably in a range of values from 13 m to 16 m. For example, this value can be 14 m. Thereby, false decisions in the detection of the state of the camera can be prevented.

Particularly preferably, the mentioned temporal successions of maximum values are filtered by means of a smoothing filter such that the masked state is recognized based on the smoothed successions. Therein, a first order recursive smoothing filter can for example be used as the smoothing filter. Such smoothing of the temporal successions provides for maximum robustness in the detection of the masked state of the camera because large temporal variations of the maximum values are compensated for - like electrical alternating voltage is smoothed with a capacitor.

The recognition of the blocked state can be effected such that the smoothed successions are compared to a limit value. The masked state can be detected if one of the successions falls below the limit value. If one of the successions falls below the limit value, thus, this indicates that high-frequency image portions are not present in a certain image region such that the lens of the camera is masked at least with respect to this image region. In this case, a warning message can for example be generated that the lens of the camera is to be cleaned.

The mentioned limit value can also be adjusted in the operation of the camera and thus "online". This adjustment is in particular effected depending on a brightness level of the imaged scene of the camera. Thus, the limit value can be adapted to the respectively current brightness conditions in the environment of the motor vehicle and the detection of the contamination on the lens of the camera can be performed depending on situation.

For different image cells of the image frame, limit values different from each other can also be defined.

With respect to the image, basically, two alternative embodiments can be provided:
On the one hand, raw data of the image can be taken as a basis for the high-pass filter. On the other hand, however, it can also be provided that the image is preprocessed before filtering the image by means of the high-pass filter and herein is for example subjected to a predetermined filtering. Therein, it can in particular be provided that a partial region of the image (so-called region of interest) is determined such that exclusively the partial region of the image is taken as a basis for the high-pass filter. Thus, the computational effort can be reduced on the one hand; erroneous detections can also be prevented on the other hand if a region of the motor vehicle itself is located in the field of view of the camera. Additionally or alternatively, the image can be scaled down and thus be subjected to the so-called "down-sampling" before it is supplied to the high-pass filter. In other words, the number of the pixels can be reduced with respect to the raw image, which are taken as a basis for the high-pass filter. This too reduces the computational effort in the processing of the image.

The above described method also allows the detection of a local contamination only of a region of the lens of the camera. In this case, the field of view of the camera is only partially masked. In an embodiment, it can be provided that the image is divided in a plurality of image cells and it is determined to each image cell whether or not the camera is masked with respect to this image cell. These image cells can also be defined depending on the positions of the above mentioned scan window. For example, it can be provided that an image cell is respectively associated with the mentioned temporal successions of maximum values or a plurality of such successions is respectively defined and evaluated to an individual image cell. If one of the successions falls below the preset limit value, thus, this can be interpreted to the effect that the lens of the camera is masked with respect to the associated image cell. As a result of the method, thus, a matrix can be output, in which it is uniquely indicated, with respect to which image cell the camera is blocked.

In a further embodiment, it can be provided that a masking level and thus a contamination level are determined at least with respect to one image cell of the image based on the maximum values, in particular based on the smoothed temporal successions. Therein, the masking level is inversely proportional to the light intensity, which can enter the interior of the camera from outside of the camera via the lens. Therein, the associated level of the masking is in particular respectively determined for each image cell of the image. This can be effected such that the number of the pixels within the image cell is determined, which are classified as "masked", and the masking level is determined depending on this number. The masking level can e.g. be defined as the ratio of the pixels classified as "masked" to the number of all of the pixels within the respective image cell. In this case, the masking level is in a range of values from 0.0 to 1.0.

A camera system according to the invention for a motor vehicle includes a camera for providing an image of an environmental region of the motor vehicle as well as an electronic computing device for processing the image. The computing device is adapted to perform a method according to the invention.

A motor vehicle according to the invention, in particular a passenger car, includes a camera system according to the invention.

The preferred embodiments presented with respect to the method according to the invention and the advantages thereof correspondingly apply to the camera system according to the invention as well as to the motor vehicle according to the invention.

Now, the invention is explained in more detail based on a preferred embodiment as well as with reference to the attached drawings.

### There show:

- Fig. 1: in schematic illustration a motor vehicle with a camera system according to an embodiment of the invention;
- Fig. 2: a flow diagram of a method according to an embodiment of the invention;
- Fig. 3: a flow diagram of a method for determining a subset of images, which are used in the method according to Fig. 2;
- Fig. 4: in schematic illustration a region of an image, wherein a method according to an embodiment of the invention is explained in more detail;
- Fig. 5: an exemplary succession of maximum values as well as a smoothed succession;
- Fig. 6: in schematic illustration an image, which is divided in several image regions, wherein a method according to an embodiment is explained in more detail;
- Fig. 7: a flow diagram of a method according to an embodiment of the invention; and
- Fig. 8: a flow diagram of a method according to a further embodiment of the invention.

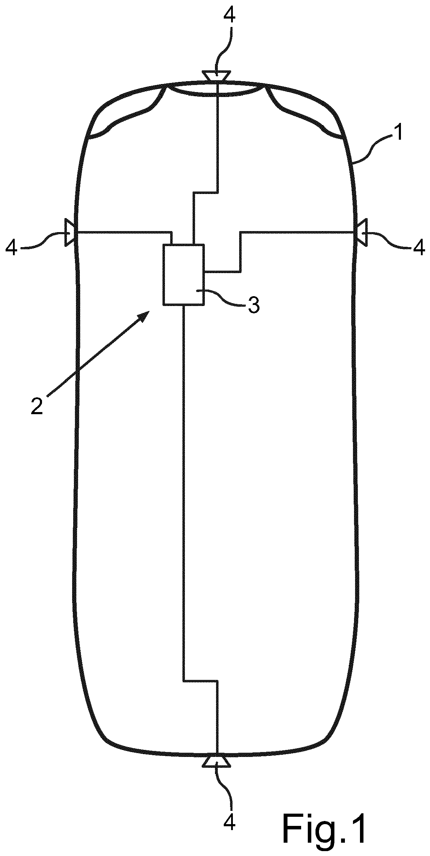

A motor vehicle 1 illustrated in Fig. 1 is for example a passenger car. The motor vehicle 1 includes a camera system 2 formed for supporting the driver in driving the motor vehicle 1. The camera system 2 has an electronic computing device 3, namely a digital signal processor. In addition, the camera system 2 has a plurality of cameras 4 disposed distributed on the motor vehicle 1. The number of the cameras 4 as well as the arrangement of the cameras 4 is only exemplarily illustrated in Fig. 1. According to embodiment, the number and the arrangement of the cameras 4 can be different. In the embodiment, a camera 4 is disposed in the front region of the motor vehicle 1 and captures the environmental region in front of the motor vehicle 1; a camera 4 is disposed in the rear region and captures the environmental region behind the motor vehicle 1; in addition, respective cameras 4 are integrated in the two exterior mirrors.

The captured images of the cameras 4 are communicated to the computing device 3, which then processes the images and provides very different functionalities in the motor vehicle 1 based on the images. Here, obstacle recognition is only exemplarily mentioned. Optionally, the images can also be presented on a display device.

Optionally, the computing device 3 can also be integrated in one of the cameras 4. It is also possible that each camera 4 respectively includes an integrated computing device 3.

The computing device 3 can detect a masked or blocked state of the cameras 4 based on the received images. Although the method described below is explained only with respect to a single camera 4, this method correspondingly also applies to other cameras 4.

In the embodiment, it is basically provided that for detection of a covered state of the camera 4, spatial high-pass filtering of the images of the camera 4 is performed and the covered state is detected depending on high-pass filtered images. However, this method does not function in two situations: on the one hand, high-frequency image portions are even caused if the camera 4 is covered by an opaque object and the images thus are very dark. The brightness values of an image then correspond to a noise signal such that the brightness average value is overall very low, but high-frequency images arise due to noise, which render the detection of the covered state of the camera 4 by means of the high-pass filter impossible. On the other hand, such high-frequency image portions even arise if the camera 4 is covered by a transparent object, but a light source is present in the environment, which results in saturation of pixels.

In the embodiment, thus, three different algorithms are executed in total, which serve for detecting different states, wherein the order of the execution of these algorithms can basically be arbitrary. A first algorithm serves for detecting a state, in which the camera 4 is covered by an opaque object. A second algorithm serves for detecting a state, in which it is assumed that the camera is covered by a transparent object due to saturation of pixels. A third algorithm serves for detecting a covered state of the camera 4 by means of a high-pass filter. Therein, the third algorithm can be universally used, but fails with an opaque object as well as with saturation of pixels.

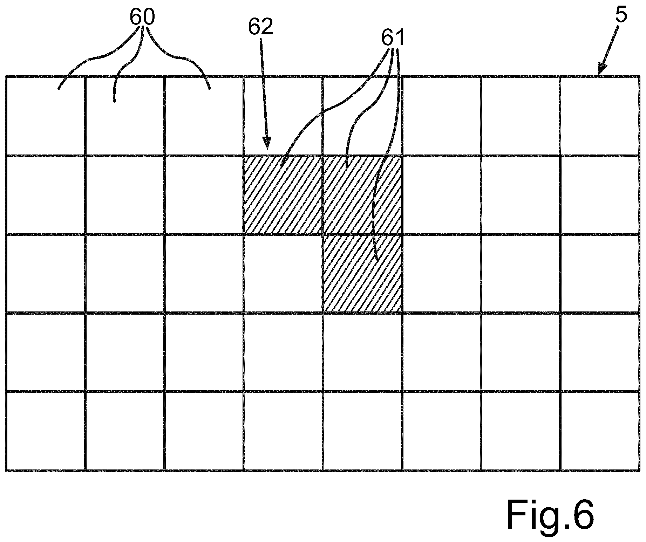

Very generally, according to Fig. 6, an image 5 of the camera 4 can be divided in several image regions 60 of the same size, for example in 8x5 image regions 60. Therein, each image region 60 can be a square region with a plurality of pixels.

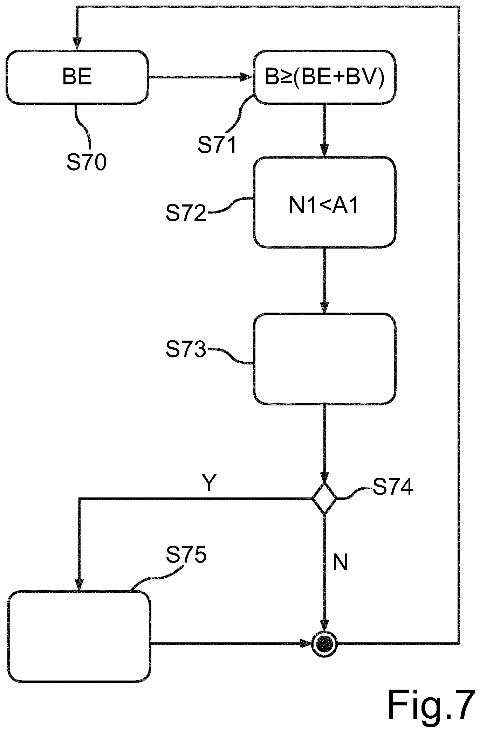

The first algorithm serving for detecting a state of the camera 4 covered by an opaque object is explained in more detail based on a flow diagram according to Fig. 7. In a first step S70, the respective brightness average value BE is separately determined for each image region 60, i.e. an average of all of the brightness values within the respective image region 60. In a further step S71, the computing device 3 separately determines the number of pixels within the respective image region 60 for each image region 60, which have a brightness value B, which is greater than the brightness average value BE at least by a predetermined limit value BV within the respective image region 60. This number of pixels is referred to as a first number N1.

In a further step S72, those image regions 60 are marked, in which the first number of pixels N1 is smaller than a preset threshold value A1. In a further step S73, combination of the marked image regions 60 to an overall image region is effected. Therein, the so-called "4-way-connectivity" can be used, in which two marked image regions 60 are combined to an overall region if the image regions 60 have a common edge. In Fig. 6, three marked image regions 61 are exemplarily shown, which are combined to an overall region 62 according to step 73. Accordingly, only adjacent image regions 60 can be combined to the overall region 62.

With further reference to Fig. 7, in a further step S74, it is checked if the overall region 62 is greater than a preset threshold. This threshold can for example be two or three or four or five image regions 60. If this condition according to step S74 is satisfied, thus, the method proceeds to a further step S75, in which the computing device 3 determines a blocked state of the camera 4.

As an additional condition according to step S72, it can also be checked if the brightness average value BE in the respective image region 60 is smaller than a limit value. Namely, only then, it can be determined with great probability that the camera 4 is covered by an opaque object and the brightness values are noise. Thus, only those image regions 60 can be marked, in which the brightness average value BE is smaller than a preset limit value.

However, if it is determined according to step S74 that the overall region 62 is smaller than the threshold, the method returns to step S70, in which a further image 5 is captured and processed. From step S75 too, the method returns to step S70.

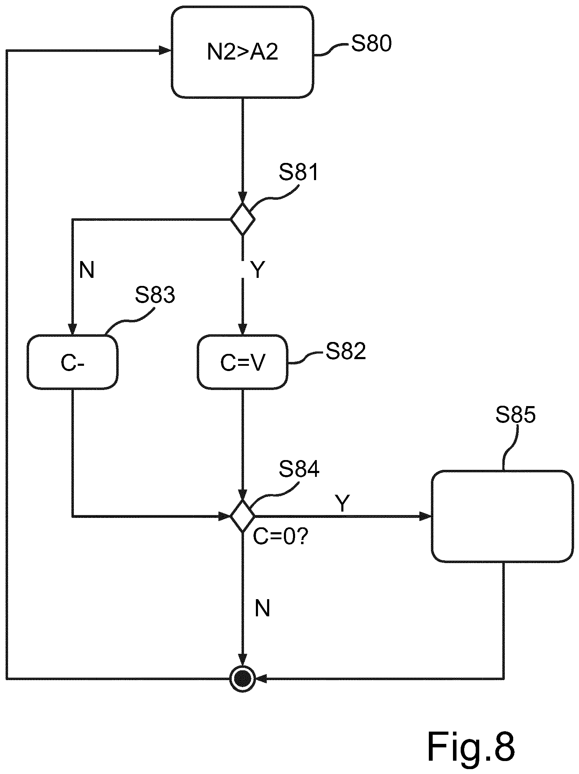

The second algorithm is now explained in more detail with reference to Fig. 8. The method starts in a step S80, in which the number of saturated pixels is determined for each image region 60 of an image 5. This number is referred to as a second number N2. Therein, saturated pixels are such pixels, the brightness value B of which is greater than a maximum possible brightness value in the digital range from 0 to 255. Thus, the maximum possible value is for example 255. If a brightness value B of a pixel is greater than this maximum value, thus, the brightness value B of this pixel is set to the maximum. According to step S80, thus, the number N2 of such saturated pixels is determined. To each image region 60, it is also checked if the number N2 of the respective image region 60 is greater than a present threshold value A2. Such image regions 60, in which the number N2 is greater than A2, are classified as "saturated image regions" according to step S80. If at least one or more "saturated image regions" 60 are detected, thus, it is assumed that the camera 4 is covered by a transparent object.

Then, a counter C is defined to each image region 60. This counter C is reset to a positive, preset value if the respective image region 60 is classified as a "saturated image region".

Thus, according to step S81, it is checked to each image region 60 whether or not this image region 60 was classified as a "saturated image region" in the current image 5. If this is the case, thus, according to step S82, the counter C is set to the predetermined, positive value V, for example in a range of values from 5 to 100. If it is determined according to step 81 that the respective image region 60 was not classified as a "saturated image region", thus, the counter C of this image region 60 is decreased, in particular decreased by "1", thus decremented. This reduction is effected in step S83.

In a further step S84, the computing device 3 checks whether or not the counter C is equal to zero. If the counter C of an image region 60 is equal to zero, thus, the classification of this image region 60 is changed from "saturated image region" to "pure image region" according to step 85. Then, the method returns to step S80, in which a further image is captured and evaluated. If it is determined according to step S84 that the counter C of the currently evaluated image region 60 is greater than zero, thus, the method again returns to step S80.

By the counter C, it is achieved that after detection of the covered state, the camera 4 is only again classified as not covered if the second number N2 remains smaller than the threshold value A2 over a predetermined sequence V of images 5.

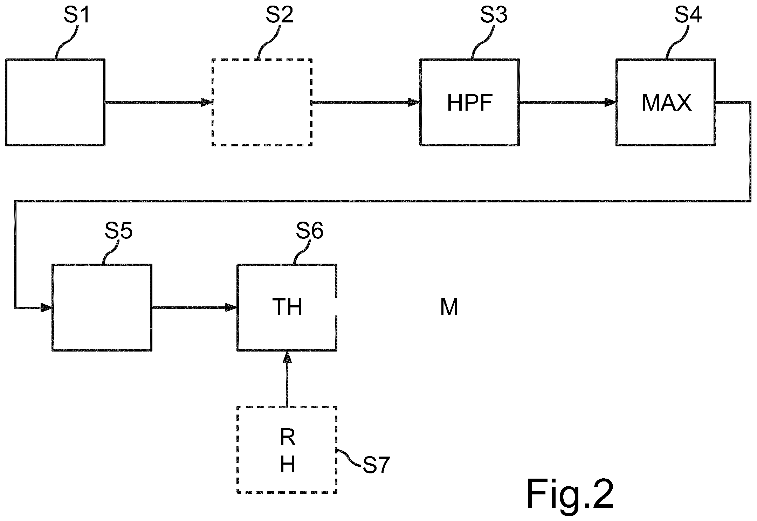

In addition to the above mentioned algorithms according to Fig. 7 and 8, a third algorithm is also executed, which serves for detecting the blocked state of the camera 4 depending on a spatially high-pass filtered image 5. A flow diagram of this algorithm is illustrated in Fig. 2.

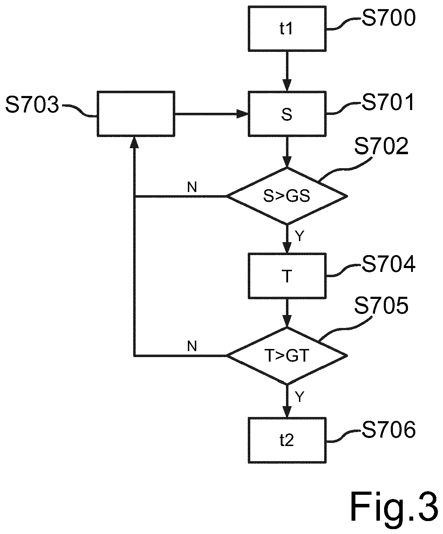

The method begins in a step S1, in which an image is received by the computing device 3. For performing the method, not all of the images of the overall sequence of images of the camera 4 are used, but only a subset. Thus, a sequence is extracted from the overall sequence of images of the camera 4, which satisfies predetermined criteria. These criteria are now explained in more detail with reference to Fig. 3. In order to avoid erroneous decisions, it is assumed that a certain period of time has elapsed on the one hand and the motor vehicle 1 has travelled a predetermined distance on the other hand between the points of time of the capture of two immediately temporally adjacent images of the selected sequence. The method for selecting the suitable sequence of images, which are taken as a basis for the method according to Fig. 2, begins in a step S700 according to Fig. 3, wherein a first image is selected at a first point of time t1. Thus, the first image is provided at a first point of time t1. In a subsequent step S701, a stretch of way S and thus a distance is calculated, which the motor vehicle 1 has traveled since the first point of time t1. In a further step S702, then, it is examined whether or not the traveled distance S is greater than a preset limit value GS. The limit value GS can for example be 14 m. If it is determined in step S702 that the traveled distance S is less than the limit value GS, in a subsequent step S703, further images are awaited, and the method again returns to step S701. In contrast, if it is determined in step S702 that the traveled distance S is greater than the limit value GS, thus, in a subsequent step S704, a period of time T since the first point of time t1 is calculated. In a further step S705, it is then examined whether or not this period of time T is greater than a preset limit value GT. This limit value GT can for example be 1 second. If the question according to step S705 is negated, the method returns to step S701 via step S703. However, if it is determined that the elapsed period of time T since the first point of time t1 is greater than the limit value GT, in a further step S706, a further image is selected at a second point of time t2, which is currently provided by the camera 4. This further image is therefore provided at the point of time t2. By the method according to Fig. 3, it is ensured that the imaged environment has altered between the points of time t1 and t2 such that erroneous detections can be prevented

With reference again to Fig. 2, the individual images are then taken as a basis for a preprocessing in a further step S2 (optional). At this point, a region of interest of the image can for example be determined, which is to be further processed. Additionally or alternatively, the so-called "down-sampling" of the image can also be performed such that the number of the pixels is overall reduced to reduce the computational effort.

In a further step S3, the individual images are subjected to high-pass filtering by means of a high-pass filter HPF. Thus, high-frequency image components are located. Here, the so-called Sobel filter with a size of e.g. 3 x 3 pixels is for example used. However, further suitable high-pass filters can also be implemented.

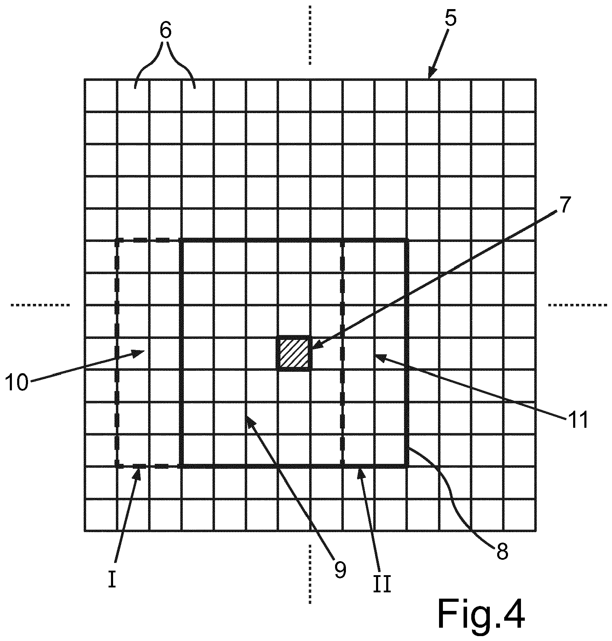

According to step S4, each image is then taken as a basis for a maximum filter MAX, the function of which is explained in more detail with reference to Fig. 4. In Fig. 4, a region of an image 5 of the camera 4 is illustrated, wherein the individual pixels are denoted by 6. A plurality of so-called target pixels 7 is defined to each image 5, wherein the number of the target pixels 7 basically can be arbitrarily selected. For example, every other pixel 6 can be defined as a target pixel 7 or even all of the pixels 6 can be defined as a target pixel 7. In each image 5, a scan window 8 is defined to each target pixel 7. In other words, in each image 5, the scan window 8 is defined, the position of which is stepwise altered in the image such that a target pixel 7 is located in the center of the scan window 8 in each position of the scan window 8. The density of the target pixels 7 therefore also defines the step size of the scan window 8. Basically, the scan window 8 can be of any size. In the embodiment, a size of 7 x 7 pixels is selected. The scan window 8 is for example shifted from left to right line by line, wherein an overlap area 9 is given for two adjacent positions I and II (dashed and solid line in Fig. 4), the size of which depends on the step size in the movement of the scan window 8.

In order to reduce the computing time, optionally, two one-dimensional scan windows 8 can also be defined instead of a two-dimensional scan window 8. One of the one-dimensional windows is then responsible for scanning along the columns, while the other window is used for scanning line by line.

In each position I, II of the scan window 8, the pixel 6 with the greatest brightness value is respectively detected. The target pixel 7 is then replaced with this maximum value. In order to therein reduce the computing time to a minimum, the following is proposed:
To each position I, II of the scan window 8, the maximum brightness value on the one hand and also the position of the pixel 6 with this maximum value on the other hand are stored. Then, it is examined in the current position II of the scan window 8 whether or not the pixel 6 with the maximum value from the previous position I is within the overlap area 9. If this is not the case and if this pixel 6 is in a region 10 outside of the current scan window 8, thus, in the current position II, all of the pixels 6 of the scan window 8 are examined to the effect, which of the pixels 6 has the maximum value. However, if the pixel 6 with the maximum value from the previous position I is in the overlap area 9, thus, in the current position II, exclusively pixels are examined, which are located within a region 11 of the scan window 8 outside of the overlap area 9. Thus, exclusively the pixels 6 located in this region 11 are examined to the effect if they have a greater brightness value than the maximum value from the previous position I. In this manner, the computing time can be considerably reduced, namely compared to an embodiment, in which always all of the pixels of the entire scan window 8 are examined.

Thereby, with a 7x7 scan window 8, the required computing time is reduced by 40%. If the window 8 is increased, in fact, an even greater reduction of the computing time can be allowed. Thus, with an 18x18 scan window 8, the required computing time is only about 28% of the computing time required upon consideration of all of the pixels.

After filtering with the maximum filter MAX, thus, an image 5 is provided, in which the maximum value from the environment of this pixel 7 is respectively indicated instead of the target pixels 7. Therein, all of the images 5 of the selected sequence are subjected to such filtering.

With further reference to Fig. 2, in a further step S5, now, a temporal component is added. A temporal succession of maximum values is determined to each position I, II of the scan window 8 and thus to each target pixel 7, namely over a plurality of images 5. Each maximum value of the current image 5 is therefore respectively added to a temporal succession such that a plurality of successions of maximum values is provided considered over the time, wherein a separate temporal succession is associated with each target pixel 7.

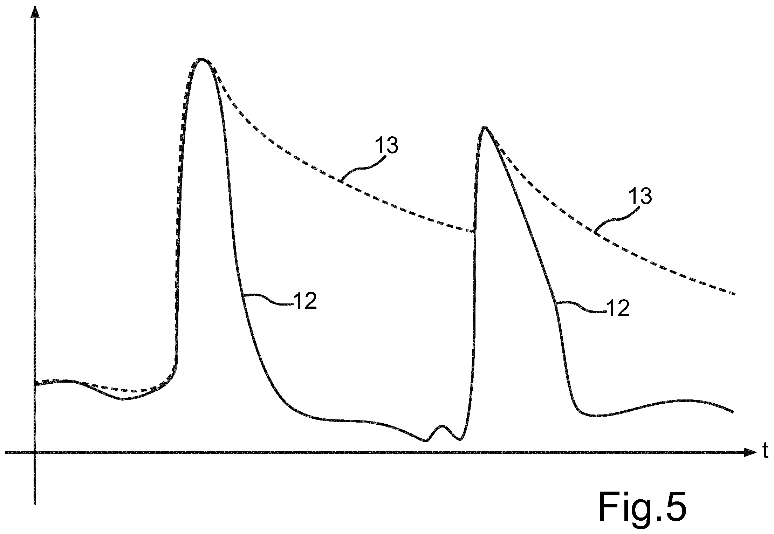

An exemplary temporal succession 12 of maximum values is illustrated in Fig. 5 over the time t. This temporal succession 12 is for example associated with the target pixel 7 according to Fig. 4. In the step S5 according to Fig. 2, each temporal succession 12 is supplied to a recursive smoothing filter, which is an IIR filter. By means of this smoothing filter, the succession 12 is smoothed - like by means of a capacitor - and a smoothed succession 13 is provided as it is exemplarily depicted in Fig. 4. For example, the smoothing filter can be implemented in a programming language as follows:

```
 if M ≥ CF, then:
      CF = M;
      else: if M < C, then:
      CF = αM + (1-α)CF
```

Herein, M denotes the current value of the succession 12, while CF denotes the current result of the smoothing filter. α represents an IIR filter coefficient, which defines the "strength" of the filter and can be in a range of values from 0 to 1.

Such a smoothed succession 13 can now be compared to a limit value TH, namely according to a further step S6 (Fig. 2). This limit value TH can also be adjusted in the operation of the camera 4, for example depending on a current noise level R and/or a current brightness level H of the scene, wherein these parameters are acquired in a step S7.

The masked state of the camera 4 is detected if the smoothed succession 13 falls below the limit value T.

As a result of the method according to Fig. 2, in particular, a matrix M can be output, the size of which is defined depending on the number of the image cells, to which it is separately determined whether or not the camera 4 is masked with respect to the respective image cell. Namely, the image 5 can be divided in a plurality of image cells, which each include multiple target pixels 7. Thus, a plurality of smoothed successions 13 is also associated with each image cell. Therefore, it is possible to determine the masking level of the camera 4 for each image cell of the image 5. For example, this can be configured such that the number of the target pixels 7 is determined, at which the succession 13 falls below the limit value TH. Then, this number can be related to the number of all of the target pixels 7 within the respective image cell, and this ratio then indicates the masking level of the camera 4 with respect to the respective image cell.

## Claims

1. Method for recognizing a covered state of a camera (4) of a motor vehicle (1) by:
- providing an image (5) of an environmental region of the motor vehicle (1) by means of the camera (4),
- determining respective brightness values (B) of pixels (6) within at least one image region (60) of the image (5),
- determining a number (N1, N2) of pixels (6) within the at least one image region (60), which satisfy a preset criterion with respect to the brightness values (B), and
- checking whether the camera (4) is covered or not covered depending on the number (N1, N2), and
- if the covered state is not detected based on the number (N1, N2) of pixels (6), the image (5) is filtered by means of a high-pass filter, HPF, and it is checked whether the camera (4) is covered or not covered based on the filtered image (5).

2. Method according to claim 1,
**characterized in that**
at least two criteria are used for the brightness values (B) and to each criterion, the number (N1, N2) of pixels (6) is determined, the brightness values (B) of which satisfy the respective criterion, wherein a different cause for the covered state is associated with each criterion.

3. Method according to claim 2,
**characterized in that**
- a first state is associated with a first criterion, in which the camera (4) is at least partially covered by an opaque object, and/or
- a second state is associated with a second criterion, in which it is assumed that the camera (4) is at least partially covered by a transparent object.

4. Method according to any one of the preceding claims,
**characterized in that**
a brightness average value (BE) within the image region (60) is determined from the brightness values (B) of the pixels (6), and according to a first criterion, a first number (N1) of pixels (6) within the image region (60) is determined, the brightness value (B) of which is greater at least by a predetermined limit value (BV) than the brightness average value (BE), wherein it is checked whether the camera (4) is covered or not covered depending on the first number (N1).

5. Method according to claim 4,
**characterized in that**
the covered state of the camera (4) is assumed if the first number (N1) is smaller than a preset threshold value (A1).

6. Method according to claim 5,
**characterized in that**
the image (5) is divided in a plurality of image regions (60) and to each image region (60), the first number (N1) of pixels (6) is respectively determined, the brightness value (B) of which is greater by at least the predetermined limit value (BV) than the brightness average value (BE) within the respective image region (60), wherein those image regions (61), in which the first number (N1) is smaller than the preset threshold value (A1), are combined to an overall region (62), and the covered state of the camera (4) is only assumed if the overall region (62) is greater than a preset threshold.

7. Method according to any one of the preceding claims,
**characterized in that**
according to a second criterion, a second number (N2) of pixels (6) within the image region (60) is determined, the brightness value (B) of which corresponds to a maximum possible brightness value due to saturation, wherein it is checked whether the camera (4) is covered or not covered depending on the second number (N2).

8. Method according to claim 7,
**characterized in that**
the covered state of the camera (4) is assumed if the second number (N2) is greater than a preset threshold value (A2).

9. Method according to claim 8,
**characterized in that**
after detection, the covered state of the camera (4) is only again assumed as not covered if the second number (N2) remains smaller than the threshold value (A2) over a predetermined sequence (V) of images (5).

10. Camera system (2) for a motor vehicle (1) with at least one camera (4) for providing an image (5) of an environmental region of the motor vehicle (1), and with a computing device (3), which is adapted to perform a method according to any one of the preceding claims.

11. Motor vehicle (1) with a camera system (2) according to claim 10.

## Patentansprüche

1. Verfahren zum Erkennen eines verdeckten Zustands einer Kamera (4) eines Kraftfahrzeugs (1) durch:
- Bereitstellen eines Bilds (5) eines Umgebungsbereichs des Kraftfahrzeugs (1) mittels der Kamera (4),
- Bestimmen von jeweiligen Helligkeitswerten (B) von Bildpunkten (6) innerhalb zumindest einer Bildregion (60) des Bilds (5),
- Bestimmen einer Anzahl (N1, N2) von Bildpunkten (6) innerhalb der zumindest einen Bildregion (60), welche ein vorgegebenes Kriterium bezüglich der Helligkeitswerte (B) erfüllen, und
- Überprüfen abhängig von der Anzahl (N1, N2), ob die Kamera (4) verdeckt oder nicht verdeckt ist, und
- falls anhand der Anzahl (N1, N2) von Bildpunkten (6) der verdeckte Zustand nicht detektiert wird, das Bild (5) mittels eines Hochpassfilters (HPF) gefiltert wird und anhand des gefilterten Bilds (5) überprüft wird, ob die Kamera (4) verdeckt oder nicht verdeckt ist.

2. Verfahren nach Anspruch 1,
**dadurch gekennzeichnet, dass**
zumindest zwei Kriterien für die Helligkeitswerte (B) verwendet werden und zu jedem Kriterium die Anzahl (N1, N2) von Bildpunkten (6) bestimmt wird, deren Helligkeitswerte (B) das jeweilige Kriterium erfüllen, wobei jedem Kriterium eine andere Ursache für den verdeckten Zustand zugeordnet ist.

3. Verfahren nach Anspruch 2,
**dadurch gekennzeichnet, dass**
- einem ersten Kriterium ein erster Zustand zugeordnet ist, in welchem die Kamera (4) zumindest partiell durch einen opaken Gegenstand verdeckt ist, und/oder
- einem zweiten Kriterium ein zweiter Zustand zugeordnet ist, in welchem angenommen wird, dass die Kamera (4) zumindest partiell durch einen transparenten Gegenstand verdeckt ist.

4. Verfahren nach einem der vorhergehenden Ansprüche,
**dadurch gekennzeichnet, dass**
aus den Helligkeitswerten (B) der Bildpunkte (6) ein Helligkeitsmittelwert (BE) innerhalb der Bildregion (60) bestimmt wird und gemäß einem ersten Kriterium eine erste Anzahl (N1) von Bildpunkten (6) innerhalb der Bildregion (60) bestimmt wird, deren Helligkeitswert (B) mindestens um einen vorbestimmten Grenzwert (BV) größer als der Helligkeitsmittelwert (BE) ist, wobei abhängig von der ersten Anzahl (N1) überprüft wird, ob die Kamera (4) verdeckt oder nicht verdeckt ist.

5. Verfahren nach Anspruch 4,
**dadurch gekennzeichnet, dass**
der verdeckte Zustand der Kamera (4) dann angenommen wird, wenn die erste Anzahl (N1) kleiner als ein vorgegebener Schwellwert (A1) ist.

6. Verfahren nach Anspruch 5,
**dadurch gekennzeichnet, dass**
das Bild (5) in eine Vielzahl von Bildregionen (60) unterteilt wird und zu jeder Bildregion (60) jeweils die erste Anzahl (N1) von Bildpunkten (6) bestimmt wird, deren Helligkeitswert (B) um mindestens den vorbestimmten Grenzwert (BV) größer als der Helligkeitsmittelwert (BE) innerhalb der jeweiligen Bildregion (60) ist, wobei diejenigen Bildregionen (61), bei denen die erste Anzahl (N1) kleiner als der vorgegebene Schwellwert (A1) ist, zu einer Gesamtregion (62) zusammengefasst werden und der verdeckte Zustand der Kamera (4) nur dann angenommen wird, wenn die Gesamtregion (62) größer als eine vorgegebene Schwelle ist.

7. Verfahren nach einem der vorhergehenden Ansprüche,
**dadurch gekennzeichnet, dass**
gemäß einem zweiten Kriterium eine zweite Anzahl (N2) von Bildpunkten (6) innerhalb der Bildregion (60) bestimmt wird, deren Helligkeitswert (B) aufgrund einer Sättigung einem maximal möglichen Helligkeitswert entspricht, wobei abhängig von der zweiten Anzahl (N2) überprüft wird, ob die Kamera (4) verdeckt oder nicht verdeckt ist.

8. Verfahren nach Anspruch 7,
**dadurch gekennzeichnet, dass**
der verdeckte Zustand der Kamera (4) dann angenommen wird, wenn die zweite Anzahl (N2) größer als ein vorgegebener Schwellwert (A2) ist.

9. Verfahren nach Anspruch 8,
**dadurch gekennzeichnet, dass**
nach Detektion des verdeckten Zustands die Kamera (4) erst dann wieder als nicht verdeckt angenommen wird, wenn über eine vorbestimmte Sequenz (V) von Bildern (5) hinweg die zweite Anzahl (N2) kleiner als der Schwellwert (A2) bleibt.

10. Kamerasystem (2) für ein Kraftfahrzeug (1), mit zumindest einer Kamera (4) zum Bereitstellen eines Bilds (5) eines Umgebungsbereichs des Kraftfahrzeugs (1), und mit einer Recheneinrichtung (3), die dazu ausgelegt ist, ein Verfahren nach einem der vorhergehenden Ansprüche durchzuführen.

11. Kraftfahrzeug (1) mit einem Kamerasystem (2) nach Anspruch 10.

## Revendications

1. Procédé, consistant à reconnaître un état couvert d'un appareil photo (4) d'un véhicule à moteur (1), en :
- fournissant une image (5) d'une région environnante du véhicule à moteur (1) au moyen de l'appareil photo (4),
- déterminant des valeurs de luminosité (B) respectives de pixels (6) dans au moins une zone d'image (60) de l'image (5),
- déterminant un nombre (N1, N2) de pixels (6) dans la au moins une zone d'image (60), qui satisfait un critère prédéfini par rapport aux valeurs de luminosité (B) et
- vérifiant si l'appareil photo (4) est couvert ou non couvert, en fonction du nombre (N1, N2) et en
- si l'état couvert n'est pas détecté en fonction du nombre (N1, N2) de pixels (6), l'image (5) est filtrée au moyen d'un filtre passe-haut, HPF et il est vérifié
- si l'appareil photo (4) est couvert ou non couvert en fonction de l'image filtrée (5).

2. Procédé selon la revendication 1,
**caractérisé en ce**
**qu'**au moins deux critères sont utilisés pour les valeurs de luminosité (B) et, pour chaque critère, le nombre (N1, N2) de pixels (6) est déterminé, dont les valeurs de luminosité (B) satisfont le critère respectif, dans lequel une cause différente de l'état couvert est associée à chaque critère.

3. Procédé selon la revendication 2,
**caractérisé en ce**
- **qu'**un premier état est associé à un premier critère, dans lequel l'appareil photo (4) est au moins en partie couvert par un objet opaque et / ou
- **qu'**un second état est associé à un second critère, dans lequel il est supposé que l'appareil photo (4) est au moins en partie couvert par un objet transparent.

4. Procédé selon l'une quelconque des revendications précédentes,
**caractérisé en ce**
**qu'**une valeur moyenne de luminosité (BE) dans la zone d'image (60) est déterminée à partir des valeurs de luminosité (B) des pixels (6) et, en fonction d'un premier critère, un premier nombre (N1) de pixels (6) dans la zone d'image (60) est déterminé, dont la valeur de luminosité (B) est supérieure au moins d'une valeur limite prédéterminée (BV) à la valeur moyenne de luminosité (BE), dans lequel il est vérifié si l'appareil photo (4) est couvert ou non couvert en fonction du premier nombre (N1).

5. Procédé selon la revendication 4,
**caractérisé en ce que**
l'état couvert de l'appareil photo (4) est supposé si le premier nombre (N1) est inférieur à une valeur seuil prédéfini (A1).

6. Procédé selon la revendication 5,
**caractérisé en ce que**
l'image (5) est divisée en une pluralité de zones d'image (60) et, pour chaque zone d'image (60), le premier nombre (N1) de pixels (6) est respectivement déterminé, dont la valeur de luminosité (B) est supérieure d'au moins la valeur limite prédéterminée (BV) à la valeur moyenne de luminosité (BE) dans la zone d'image (60) respective, dans lequel ces zones d'image (61), dans lesquelles le premier nombre (N1) est inférieur à la valeur seuil prédéfinie (A1), sont combinées à une zone globale (62) et l'état couvert de l'appareil photo (4) n'est supposé que si la zone globale (62) est supérieure à un seuil prédéfini.

7. Procédé selon l'une quelconque des revendications précédentes,
caractérisé en que,
selon un second critère, un second nombre (N2) de pixels (6) dans la zone d'image (60) est déterminé, dont la valeur de luminosité (B) correspond à une valeur de luminosité possible maximale due à la saturation, dans lequel il est vérifié si l'appareil photo (4) est couvert ou non couvert, en fonction du second nombre (N2).

8. Procédé selon la revendication 7,
**caractérisé en ce que**
l'état couvert de l'appareil photo (4) est supposé si le second nombre (N2) est supérieur à une valeur seuil prédéfinie (A2).

9. Procédé selon la revendication 8,
**caractérisé en ce**
**qu'**après détection, l'état couvert de l'appareil photo (4) est à uniquement à nouveau supposé comme non couvert si le second nombre (N2) demeure inférieur à la valeur seuil (A2) sur une séquence prédéterminée (V) d'images (5).

10. Système d'appareil photo (2) pour un véhicule à moteur (1) avec au moins un appareil photo (4), destiné à fournir une image (5) d'une région environnante du véhicule à moteur (1) et avec un dispositif informatique (3), qui est adapté pour exécuter un procédé selon l'une quelconque des revendications précédentes.

11. Véhicule à moteur (1) avec un système d'appareil photo (2) selon la revendication 10.
